# EUROPEAN PATENT SPECIFICATION

(11) **EP 4 328 991 B1**
(45) Date of publication and mention of the grant of the patent: **22.07.2026**
(21) Application number: 21965040.5
(22) Date of filing: 23.11.2021
(51) Int. Cl.: H01M 10/04, H01M 10/0525, H01M 10/0583

(54) **ELECTRODE ASSEMBLY, BATTERY CELL, BATTERY, AND ELECTRIC APPARATUS**
ELEKTRODENANORDNUNG, BATTERIEZELLE, BATTERIE UND ELEKTRISCHE VORRICHTUNG
ENSEMBLE D'ÉLECTRODES, ÉLÉMENT DE BATTERIE, BATTERIE ET APPAREIL ÉLECTRIQUE

(43) Date of publication of application: 28.02.2024
(73) Proprietor: Contemporary Amperex Technology (Hong Kong) Limited, Central, Central And Western District (HK)
(72) Inventor: WANG, Hong, Ningde, Fujian 352100 (CN); LIN, Jia, Ningde, Fujian 352100 (CN); LIN, Jiang, Ningde, Fujian 352100 (CN); LIU, Jiang, Ningde, Fujian 352100 (CN)
(74) Representative: Lorenz Seidler Gossel Part. mbB
(86) International application number: PCT/CN2021/132508
(87) International publication number: WO 2023/092300

(56) References cited:
- WO-A1-2016/120060
- WO-A1-2018/180599
- WO-A1-2021/109363
- WO-A1-2021/177681
- WO-A1-2021/187726
- CN-A- 106 684 319
- CN-A- 110 943 200
- CN-A- 113 381 054
- CN-U- 213 340 434
- CN-U- 214 254 489
- JP-A- 2007 149 349
- US-A1- 2015 111 108

## Description

### TECHNICAL FIELD

The present application relates to the technical field of batteries and, more particularly, relates to an electrode assembly and a manufacturing method and system therefor, a battery cell, a battery, and an electrical device.

### BACKGROUND

Battery cells are widely used in electronic equipment, such as mobile phones, laptops, battery cars, electric vehicles, electric planes, electric ships, electric toy cars, electric toy ships, electric toy planes, and electric tools, etc. A battery cell may include a cadmium-nickel battery cell, a hydrogen-nickel battery cell, a lithium-ion battery cell, and a secondary alkaline zinc-manganese battery cell, etc.

In the development of battery technologies, how to improve energy density of a battery cell is one of the research trends of battery technologies.

Document WO 2021/177681 A1 shows electrodes assemblies according to the preamble of claim 1.

### SUMMARY

The present application provides an electrode assembly and a manufacturing method and system therefor, a battery cell, a battery, and an electrical device, which can increase energy density.

In a first aspect, an embodiment of the present application provides an electrode assembly including a plurality of positive electrode sheets and a negative electrode sheet, the positive electrode sheets each including a positive electrode current collector and a positive electrode active material layer coated on a surface of the positive electrode current collector, and the negative electrode sheet including a negative electrode current collector and a negative electrode active material layer coated on a surface of the negative electrode current collector. The negative electrode sheet is continuously bent and includes a plurality of laminated segments arranged in a laminated manner and a plurality of bent segments, each of the plurality of bent segments being used to connect the two adjacent laminated segments; the plurality of positive electrode sheets are alternately laminated with the plurality of laminated segments in a first direction, each of the plurality of laminated segments being disposed between the two adjacent positive electrode sheets. In the electrode assembly, an outermost positive electrode sheet is configured as a unilateral electrode, the unilateral electrode having the positive electrode active material layer coated on an inner side, but not on an outer side, of the positive electrode current collector of the unilateral electrode. The bent segment is connected to an end of the laminated segment in a second direction that is perpendicular to the first direction; in the second direction, the unilateral electrode does not extend beyond the bent segment adjacent thereto.

In the above scheme, by providing the unilateral electrode to make full use of the negative electrode active material layer coated on the outermost laminated segment of the negative electrode sheet, and leaving the outer side of the unilateral electrode uncoated with the positive electrode active material layer, wastage of the positive and negative electrode active materials can be reduced and the energy density of the electrode assembly can be improved. The unilateral electrode is an overall unilateral coated structure, which is easy to be obtained with a simple preparation process. By setting the unilateral electrode not to extend in the second direction beyond the bent segment adjacent thereto, ions released from the positive electrode active material layer of the unilateral electrode can get embedded in the negative electrode active material layer as much as possible, thereby reducing risk of ion precipitation, and improving safety performance of the electrode assembly.

In some embodiments, the unilateral electrode does not extend in the second direction beyond an end of the laminated segment adjacent thereto that faces away from the bent segment.

In the above scheme, by setting that neither end of the unilateral electrode in the second direction extends beyond the negative electrode sheet, the ions released from the positive electrode active material layer of the unilateral electrode can get embedded in the negative electrode active material layer as much as possible, thereby reducing a risk of ion precipitation, and improving safety performance of the electrode assembly.

In some embodiments, the unilateral electrode does not extend in the second direction beyond an end of the laminated segment adjacent thereto that is near the bent segment.

In the above scheme, by setting the positive electrode active material layer of the unilateral electrode opposite to the negative electrode active material layer of the laminated segment, the ions released from the positive electrode active material layer of the unilateral electrode get embedded in the negative electrode active material layer as much as possible. By setting the unilateral electrode not to overlap with the adjacent bent segment in the first direction, a gap between the positive electrode active material layer and the negative electrode active material layer can be reduced, thereby shortening an ion transport path, and reducing the risk of ion precipitation.

In some embodiments, in a third direction that is perpendicular to the first direction and the second direction, both ends of the laminated segment extend beyond the positive electrode active material layer of the unilateral electrode.

In the above scheme, by setting that both ends of the negative electrode active material layer of the laminated segment in the third direction extend beyond the positive electrode active material layer of the unilateral electrode, a sufficient embedding space can be provided for the ions released from the positive electrode active material layer of the unilateral electrode, thereby reducing the risk of ion precipitation.

In some embodiments, the positive electrode sheet disposed between the adjacent laminated segments is configured as a bilateral electrode, the bilateral electrode having the positive electrode active material layer coated on both sides of the positive electrode current collector of the bilateral electrode.

In the above scheme, by using the bilateral electrode between the adjacent laminated segments, the ions released from the positive electrode active material layer on both sides of the positive electrode current collector of the bilateral electrode get embedded in the negative electrode active material layers of the corresponding laminated segments, respectively.

In some embodiments, a dimension of the unilateral electrode in the second direction is less than a dimension of the bilateral electrode in the second direction.

In the above scheme, by setting the dimension of the unilateral electrode in the second direction to be smaller, it can be ensured that, compared with the bilateral electrode, the unilateral electrode is less likely to extend beyond the adjacent laminated segment in the second direction even if the unilateral electrode is warped and deformed, thus reducing accuracy requirements for positioning of the unilateral electrode during assembly and simplifying an assembly process.

In some embodiments, a dimension of the unilateral electrode in the third direction is less than a dimension of the bilateral electrode in the third direction, the third direction being perpendicular to the first direction and the second direction.

In the above scheme, by setting the dimension of the unilateral electrode in the third direction to be smaller, it can be ensured that, compared with the bilateral electrode, the positive electrode active material layer of the unilateral electrode is less likely to extend beyond the adjacent laminated segment in the third direction even if the unilateral electrode is warped and deformed, thus reducing accuracy requirements for positioning of the unilateral electrode during assembly and simplifying the assembly process.

In some embodiments, a thickness of the positive electrode current collector of the unilateral electrode is greater than a thickness of the positive electrode current collector of the bilateral electrode.

In the above scheme, by setting the unilateral electrode, compared with the bilateral electrode, to have a larger thickness of the positive electrode current collector, warp and deformation of the unilateral electrode during a roll-pressing process can be reduced, thereby reducing misalignment of the unilateral electrode in the assembly process, and ensuring the electrode assembly's safety performance.

In some embodiments, a compaction density of the positive electrode active material layer of the unilateral electrode is less than a compaction density of the positive electrode active material layer of the bilateral electrode.

In the above scheme, by setting the unilateral electrode, compared with the bilateral electrode, to have a smaller compaction density of the positive electrode active material layer, pressure on the unilateral electrode during the roll-pressing process can be reduced, thereby reducing warp and deformation of the unilateral electrode, reducing misalignment of the unilateral electrode in the assembly process, and ensuring the electrode assembly's safety performance.

In some embodiments, a weight per unit area of the positive electrode active material layer of the unilateral electrode is less than a weight per unit area of the positive electrode active material layer of the bilateral electrode.

In the above scheme, by decreasing the weight per unit area of the positive electrode active material layer of the unilateral electrode, the compaction density of the positive electrode active material layer of the unilateral electrode is less than that of the positive electrode active material layer of the bilateral electrode, thereby reducing warp and deformation of the unilateral electrode, reducing misalignment of the unilateral electrode in the assembly process, and ensuring the electrode assembly's safety performance.

In some embodiments, a thickness of the positive electrode active material layer of the unilateral electrode is greater than a thickness of the positive electrode active material layer of the bilateral electrode.

In the above scheme, by increasing the thickness of the positive electrode active material layer of the unilateral electrode, the compaction density of the positive electrode active material layer of the unilateral electrode is less than that of the positive electrode active material layer of the bilateral electrode, thereby reducing warp and deformation of the unilateral electrode, reducing misalignment of the unilateral electrode in the assembly process, and ensuring the electrode assembly's safety performance.

In some embodiments, the electrode assembly further includes a first separator and a second separator, which are used for insulating and separating the positive electrode sheet from the negative electrode sheet. The first separator includes a plurality of first separator segments arranged in the first direction, at least one of the plurality of first separator segments being disposed at an outer side of the unilateral electrode.

In the above scheme, the first separator segment disposed at the outer side of the unilateral electrode is capable of separating the unilateral electrode from other structures inside the battery cell, thereby improving insulation performance and reducing a risk of short circuit.

In some embodiments, the second separator includes a plurality of second separator segments arranged in the first direction, with at least one of the plurality of second separator segments being disposed at an outer side of the unilateral electrode.

In the above scheme, with the at least one first separator segment and the at least one second separator segment disposed at the outer side of the unilateral electrode, the insulation performance can be further improved, thereby reducing the risk of short circuit.

In a second aspect, an embodiment of the present application provides a battery cell, including: the electrode assembly according to any one of the embodiments of the first aspect; and a shell for housing the electrode assembly.

In a third aspect, an embodiment of the present application provides a battery including a plurality of the battery cells of the second aspect.

In a fourth aspect, an embodiment of the present application provides an electrical device including the battery of the third aspect, the battery being used for providing electrical energy.

In a fifth aspect, an embodiment of the present application provides a method of manufacturing an electrode assembly, the method including:
providing a positive electrode sheet, the positive electrode sheet including a positive electrode current collector and a positive electrode active material layer coated on a surface of the positive electrode current collector;
providing a negative electrode sheet, the negative electrode sheet including a negative electrode current collector and a negative electrode active material layer coated on a surface of the negative electrode current collector; and
continuously bending the negative electrode sheet and assembling the bent negative electrode sheet with a plurality of the positive electrode sheets,
wherein the negative electrode sheet includes a plurality of laminated segments arranged in a laminated manner and a plurality of bent segments, each of the plurality of bent segments being used to connect the two adjacent laminated segments; the plurality of the positive electrode sheets are alternately laminated with the plurality of laminated segments in a first direction, each of the plurality of laminated segments being disposed between the two adjacent positive electrode sheets; in the electrode assembly, an outermost positive electrode sheet is configured as a unilateral electrode, the unilateral electrode having the positive electrode active material layer coated on an inner side, but not on an outer side, of the positive electrode current collector of the unilateral electrode; the bent segment is connected to an end of the laminated segment in a second direction that is perpendicular to the first direction; in the second direction, the unilateral electrode does not extend beyond the bent segment adjacent thereto.

In a sixth aspect, an embodiment of the present application provides a system for manufacturing an electrode assembly, the system including: a first providing means for providing a positive electrode sheet, the positive electrode sheet including a positive electrode current collector and a positive electrode active material layer coated on a surface of the positive electrode current collector; a second providing means for providing a negative electrode sheet, the negative electrode sheet including a negative electrode current collector and a negative electrode active material layer coated on a surface of the negative electrode current collector; and an assembly means for continuously bending the negative electrode sheet and assembling the bent negative electrode sheet with a plurality of the positive electrode sheets, wherein the negative electrode sheet includes a plurality of laminated segments arranged in a laminated manner and a plurality of bent segments, each of the plurality of bent segments being used to connect the two adjacent laminated segments; the plurality of the positive electrode sheets are alternately laminated with the plurality of laminated segments in a first direction, each of the plurality of laminated segments being disposed between the two adjacent positive electrode sheets. In the electrode assembly, an outermost positive electrode sheet is configured as a unilateral electrode, the unilateral electrode having the positive electrode active material layer coated on an inner side, but not on an outer side, of the positive electrode current collector of the unilateral electrode. The bent segment is connected to an end of the laminated segment in a second direction that is perpendicular to the first direction; in the second direction, the unilateral electrode does not extend beyond the bent segment adjacent thereto.

### BRIEF DESCRIPTION OF DRAWINGS

In order to more clearly illustrate under the technical solutions in embodiments of the present application, the following will briefly introduce the drawings that are desired to be used in the embodiments of the present application. Obviously, the drawings in the following description are merely some embodiments of the present application, from which other drawings may be obtained without exerting inventive effort by those ordinarily skilled in the art.
FIG. 1 is a schematic structural diagram of a vehicle provided in some embodiments of the present application;
FIG. 2 is a schematic exploded view of a battery provided in some embodiments of the present application;
FIG. 3 is a schematic exploded view of a battery module shown in FIG. 2;
FIG. 4 is a schematic exploded view of a battery cell provided in some embodiments of the present application;
FIG. 5 is a schematic front view of an electrode assembly provided in some embodiments of the present application;
FIG. 6 is a schematic cross-sectional view of the electrode assembly shown in FIG. 5, taken in an A-A direction;
FIG. 7 is a schematic cross-sectional view of the electrode assembly shown in FIG. 5, taken in a B-B direction;
FIG. 8 is a schematic flow chart of a method of manufacturing an electrode assembly provided in some embodiments of the present application; and
FIG. 9 is a schematic block diagram of a system for manufacturing an electrode assembly provided in some embodiments of the present application.

The accompanying drawings are not drawn to actual scale.

### DETAILED DESCRIPTION OF EMBODIMENTS

In order to make objects, technical schemes and advantages of the embodiments of the present application clearer, the technical schemes of the embodiments of the present application will be described clearly below in conjunction with the accompanying drawings in the embodiments of the present application. Obviously, the described embodiments are merely a part of but not all the embodiments of the present application. Based on the embodiments of the present application, all other embodiments obtained by a person of ordinary skill in the art without any creative effort fall within the scope of protection of the present application.

Unless otherwise defined, all technical and scientific terms used in the present application have the same meanings as are commonly understood by those skilled in the art of the present application. Terms used in the specification of the present application are merely for the purpose of describing specific embodiments and are not intended to limit the present application. The terms "comprise" and "have" and any variations thereof in the specification and claims of the present application and the above description of the drawings are intended to cover non-exclusive inclusion.

In the description of embodiments of the present application, the technical terms "first," "second" and the like are used only to distinguish different objects and are not understood to indicate or imply relative importance or to imply the number, specific order or primary and secondary relationship of the indicated technical features. In the description of embodiments of the present application, "a plurality of" means more than two, unless expressly specified otherwise.

"Embodiment" referred to in the present application means that particular features, structures, or characteristics described in conjunction with embodiments may be included in at least one of the embodiments of the present application. The presence of the phrase in various places in the specification does not necessarily mean the same embodiment, nor is it a separate or alternative embodiment that is mutually exclusive with other embodiments. It is explicitly and implicitly understood by those skilled in the art that the embodiments described herein may be combined with other embodiments.

In the description of the present application, it is to be noted that the terms "mount", "connected", "connect" and "attached" are to be understood in a broad sense, unless otherwise expressly specified and limited, for example, it may be a fixed connection, or a removable connection, or an integral connection; it may be a direct connection, or an indirect connection via an intermediate medium, and it may be internal communication of two elements. To a person of ordinary skill in the art, the specific meaning of the above terms in the present application may be understood according to specific situations.

In the description of embodiments of the present application, the term "and/or" is simply a description of the association relationship of the associated objects, indicating that three relationships can exist, for example, A and/or B may indicate that A exists alone, A and B exist at the same time, and B exists alone. In addition, the character "/" herein generally means that the associated objects are in an "or" relationship.

In embodiments of the present application, the same reference numerals indicate the same components, and detailed descriptions of the same components are omitted in different embodiments for the sake of brevity. It is to be understood that the thickness, length, width, etc. of the various components in the embodiments of the present application illustrated in the accompanying drawings as well as the overall thickness, length, width, etc. of an integrated device are illustrative merely and shall not constitute any limitation to the present application.

In the description of the embodiments of the present application, orientation or positional relationships indicated by the technical terms such as "center", "longitudinal", "transverse", "length", "width", "thickness", "up", "down", "front", "back", "left", "right", "vertical", "horizontal", "top", "bottom", "inner", "outer", "clockwise", "counterclockwise", "axial", "radial", "circumferential", etc. are based on the orientation or positional relationships shown in the drawings, for ease of description of the embodiments of the present application and simplification of the description only, these terms do not indicate or imply that the apparatus or element referred to must have a specific orientation or be constructed and operated in a specific orientation, and therefore cannot be construed as limitations to the embodiments of the present application.

In the description of the embodiments of the present application, the term "a plurality of" refers to more than two (including two). Similarly, "a plurality of groups" refers to more than two (including two) groups, and "a plurality of pieces" refers to more than two (including two) pieces.

In the description of the embodiments of the present application, "parallel" refers not only to a situation of absolutely parallel but also to a situation of substantially parallel as conventionally known in engineering; meanwhile, "perpendicular" refers not only to a situation of absolutely perpendicular but also to a situation of substantially perpendicular as conventionally known in engineering.

In embodiments of the present application, a battery cell may include a lithium-ion secondary battery cell, a lithium-ion primary battery cell, a lithium-sulfur battery cell, a sodium-lithium-ion battery cell, a sodium-ion battery cell, or a magnesium-ion battery cell, etc., and the embodiments of the present application are not limited thereto. The battery cell may be in cylindrical, flat, cuboid or other shapes, etc., and the embodiments of the present application are not limited thereto.

A battery as referred to in the embodiments of the present application means a single physical module including one or more battery cells to provide higher voltage and capacity. For example, the battery referred to in the present application may include a battery module or a battery pack, etc. A battery generally includes a case for encapsulating one or more battery cells. The case can prevent liquids or other foreign objects from affecting charging or discharging of the battery cells.

The battery cell includes an electrode assembly and an electrolyte, and the electrode assembly includes a positive electrode sheet, a negative electrode sheet, and a separator. The battery cell works mainly depending on the movement of metal ions between the positive and negative electrode sheets. The positive electrode sheet includes a positive electrode current collector and a positive electrode active material layer, the positive electrode active material layer being coated on a surface of the positive electrode current collector; the positive electrode current collector includes a positive coating area and a positive electrode tab connected to the positive coating area, the positive coating area being coated with the positive electrode active material layer, and the positive electrode tab being uncoated with the positive electrode active material layer. Taking a lithium-ion battery as an example, the positive electrode current collector may be made of aluminum, and the positive electrode active material layer includes a positive electrode active material which may be lithium cobaltate, lithium iron phosphate, ternary lithium, or lithium manganate, etc. The negative electrode sheet includes a negative electrode current collector and a negative electrode active material layer, the negative electrode active material layer being coated on a surface of the negative electrode current collector; the negative electrode current collector includes a negative coating area and a negative electrode tab connected to the negative coating area, the negative coating area being coated with the negative electrode active material layer, and the negative electrode tab being uncoated with the negative electrode active material layer. The negative electrode current collector may be made of copper, and the negative electrode active material layer includes a negative electrode active material which may be carbon or silicon, etc. The separator may be made of polypropylene (PP) or polyethylene (PE), etc.

In related technologies, the electrode assembly usually adopts a wound-type structure or a laminated-type structure. In a wound-type electrode assembly, the positive electrode sheet, the separator, and the negative electrode sheet are sequentially laminated and wound more than two turns. In a laminated-type electrode assembly, a plurality of positive electrode sheets and a plurality of negative electrode sheets are alternately laminated.

The wound-type electrode assembly is formed by winding, and the positive and negative electrode sheets are bent in a winding process, which could trigger shedding phenomenon of the active materials and thus affect performance of the electrode assembly. Compared with the wound-type electrode assembly, the laminated-type electrode assembly has the positive electrode sheet and the negative electrode sheet both in a flat plate structure, which results in better service performance. However, in a process of forming the laminated-type electrode assembly, the positive electrode sheets and negative electrode sheets have a complicated process of laminating, which leads to low forming efficiency of the laminated-type electrode assembly.

In view of the defects existing in the above two structures, for the purpose of balancing service performance and forming efficiency of the electrode assembly, the inventor(s) has tried to provide the negative electrode sheet as a continuous structure and form it by continuous bending. Specifically, the negative electrode sheet is continuously bent and includes a plurality of laminated segments arranged in a laminated manner and a plurality of bent segments, each of the plurality of bent segments being used to connect the two adjacent laminated segments, and a plurality of positive electrode sheets are alternately laminated with the plurality of laminated segments. The positive electrode sheet needs no bending, which can improve the performance of the electrode assembly; the negative electrode sheet is a continuous structure, eliminating the need for repeated pick and place by equipment, thus improving the forming efficiency of the electrode assembly.

The inventor(s) has noted that, in the forming process of the electrode assembly, each of the positive electrode sheets is inserted between the two adjacent laminated segments, while the negative electrode sheet is provided with the negative electrode active material layer coated on its both sides, which could lead to wastage of the negative electrode active material layer coated on an outer side of an outermost laminated segment of the negative electrode sheet and thus affect energy density of the electrode assembly. Also, it is a complicated process to remove the negative electrode active material layer on the outer side of the outermost laminated segment of the negative electrode sheet during preparation of the negative electrode sheet, because of the continuous structure of the negative electrode sheet.

In view of this, an embodiment of the present application provides an electrode assembly. A positive electrode sheet is provided on an outer side of an outermost laminated segment of a negative electrode sheet, and the positive electrode sheet is a unilateral electrode which has a positive electrode active material layer coated on an inner side, but not on an outer side, of the unilateral electrode, thus reducing the wastage of active materials and improving the energy density of the electrode assembly. The unilateral electrode is an overall unilateral coated structure, which is easy to be obtained with a simple preparation process. In the electrode assembly, the unilateral electrode does not extend beyond the bent segment adjacent thereto, so that ions released from the positive electrode active material layer of the unilateral electrode can get embedded in a negative electrode active material layer, thereby reducing risk of ion precipitation, and improving safety performance of the electrode assembly.

The technical schemes described in the embodiments of the present application are applicable to a battery and to an electrical device that use the same.

The electrical device may be a vehicle, a cell phone, a portable device, a laptop, a ship, a spacecraft, an electric toy, and an electric tool, etc. The vehicle may be fuel vehicles, gas vehicles or new energy vehicles, and the new energy vehicles may be pure electric vehicles, hybrid vehicles or extended-range vehicles, etc.; the spacecraft includes airplanes, rockets, space shuttles and spaceships, etc.; the electric toy includes fixed or mobile electric toys, such as game machines, electric car toys, electric ship toys, electric plane toys and so on; the electric tool includes metal slitting electric tools, grinding electric tools, assembly electric tools and railway electric tools, such as electric drills, electric grinders, electric wrenches, electric screwdrivers, electric hammers, impact electric drills, concrete vibrators and electric planers, etc. The embodiments of the present application do not have special restrictions on the above-mentioned electrical devices.

For ease of illustration, the following embodiment is described with a vehicle as an electrical device.

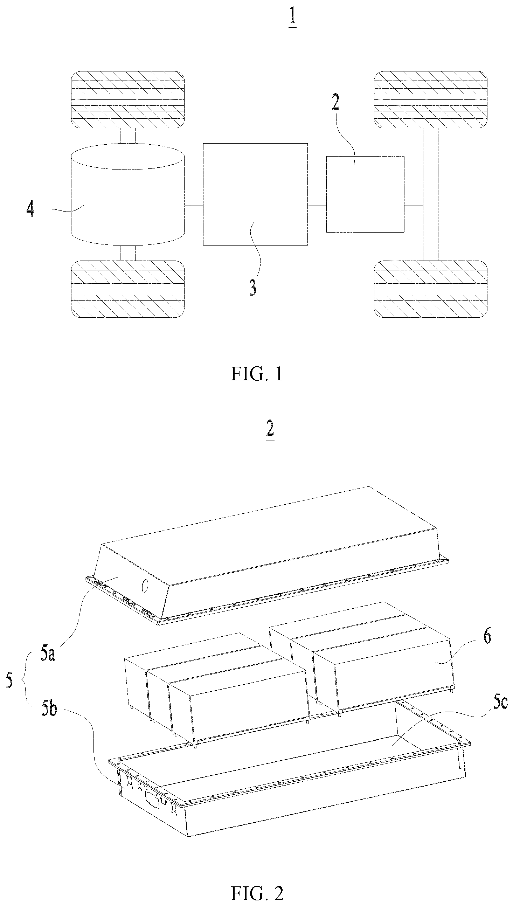

FIG. 1 is a schematic structural diagram of a vehicle provided in some embodiments of the present application.

As shown in FIG. 1, the vehicle 1 is internally provided with a battery 2, and the battery 2 may be provided at a bottom or front portion or rear portion of the vehicle 1. The battery 2 can be used to supply electricity to the vehicle 1. For example, the battery 2 can be used as an operating power source for the vehicle 1.

The vehicle 1 may also include a controller 3 and a motor 4. The controller 3 is used to control the battery 2 to supply electricity to the motor 4, for example, for operating power requirement of the vehicle 1 for starting, navigation and driving.

In some embodiments of the present application, the battery 2 can be used not only as an operating power source for the vehicle 1, but also as a driving power source for the vehicle 1, replacing or partially replacing fuel or natural gas to provide driving power for the vehicle 1.

FIG. 2 is a schematic exploded view of a battery provided in some embodiments of the present application. As shown in FIG. 2, the battery 2 includes a case 5 and a battery cell (not shown in FIG. 2), and the battery cell is housed in the case 5.

The case 5 is used to house the battery cell, and the case 5 may be in various structures. In some embodiments, the case 5 may include a first case body portion 5a and a second case body portion 5b, the first case body portion 5a and the second case body portion 5b being capable of fitting with each other in a covering manner and together defining a housing space 5c for housing the battery cell. The second case body portion 5b may be in a hollow structure with one open end, the first case body portion 5a is in a sheet structure, and the first case body portion 5a fits over an open side of the second case body portion 5b in a covering manner to form the case 5 with the housing space 5c; alternatively, the first case body portion 5a and the second case body portion 5b may both be in a hollow structure with one open end, and an open side of the first case body portion 5a fits over an open side of the second case body portion 5b in a covering manner to form the case 5 with the housing space 5c. Of course, the first case body portion 5a and the second case body portion 5b may be of various shapes, for example, cylindrical, cuboid, etc.

In order to improve sealing between the first case body portion 5a and the second case body portion 5b after they are connected, a sealing member such as a sealant, a sealing ring, etc., may also be provided between the first case body portion 5a and the second case body portion 5b.

Assuming that the first case body portion 5a fits over a top of the second case body portion 5b in a covering manner, the first case body portion 5a may also be called an upper case cover and the second case body portion 5b may be called a lower case body.

In the battery 2, the battery cell may be one or more. If a plurality of battery cells are provided, the plurality of battery cells may be connected in series or in parallel or in hybrid, in which hybrid means that the plurality of battery cells are connected in combination of series and parallel. The plurality of battery cells may be directly connected in series or in parallel or in hybrid together, and then a whole formed by the plurality of battery cells is housed in the case 5; of course, it is also possible that the plurality of battery cells are connected in series or in parallel or in hybrid to form a battery module 6 first, and then a plurality of the battery modules 6 are connected in series or in parallel or in hybrid to form a whole to be housed in the case 5.

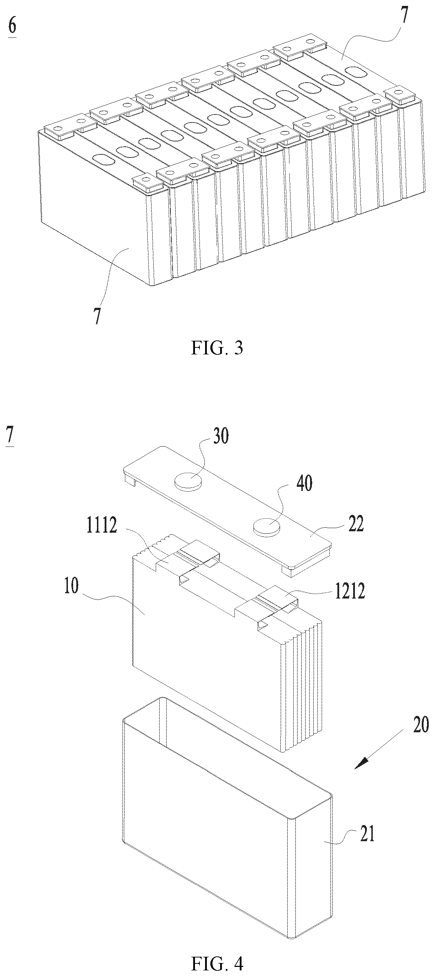

FIG. 3 is a schematic exploded view of a battery module shown in FIG. 2.

In some embodiments, as shown in FIG. 3, a plurality of battery cells 7 are provided, and the plurality of battery cells 7 are connected in series or in parallel or in hybrid first to form the battery module 6. A plurality of the battery modules 6 are then connected in series or in parallel or in hybrid to form a whole to be housed in the case.

The plurality of battery cells 7 in the battery module 6 may be electrically connected to one another by means of a bus member to achieve parallel or series or hybrid connection of the plurality of battery cells 7 in the battery module 6.

FIG. 4 is a schematic exploded view of a battery cell provided in some embodiments of the present application.

As shown in FIG. 4, in some embodiments, the battery cell 7 includes an electrode assembly 10 and a shell 20, and the shell 20 is used to house the electrode assembly 10.

The electrode assembly 10 is a core component for achieving the charging and discharging functions of the battery cell 7, and includes a positive electrode sheet, a negative electrode sheet, and a separator, the separator being used to insulate and separate the positive electrode sheet from the negative electrode sheet. The electrode assembly 10 works mainly depending on the movement of metal ions between the positive electrode sheet and the negative electrode sheet.

In the battery cell 7, one or a plurality of the electrode assemblies 10 may be provided according to actual usage requirements. Exemplarily, in FIG. 4, two electrode assemblies 10 are provided.

The shell 20 is in a hollow structure with a housing cavity formed inside for housing the electrode assembly 10 and an electrolyte. The shell 20 may be of various shapes, e.g., cylindrical, cuboid, etc. The shape of the shell 20 can be determined by a specific shape of the electrode assembly 10. For example, if the electrode assembly 10 is in a cylindrical structure, then a cylindrical shell may be adopted; if the electrode assembly 10 is in a cuboid structure, then a cuboid shell may be adopted.

In some embodiments, the shell 20 includes a shell body 21 and an end cap 22, the shell body 21 being in a hollow structure with an open side, and the end cap 22 fitting over the open side of the shell body 21 in a covering manner to form a sealed connection, so as to form a housing cavity for housing the electrode assembly 10 and an electrolyte.

In some embodiments, the battery cell 7 further includes a positive terminal 30 and a negative terminal 40, which are mounted on the shell 20, the positive terminal 30 being used to electrically connect to the positive electrode sheet, and the negative terminal 40 being used to electrically connect to the negative electrode sheet, so as to conduct out electrical energy from the electrode assembly 10. Exemplarily, the positive terminal 30 and the negative terminal 40 are mounted on the end cap 22.

The electrode assembly 10 further includes a positive electrode tab 1112 and a negative electrode tab 1212, the positive electrode tab 1112 being used to electrically connect to the positive terminal 30, and the negative electrode tab 1212 being used to electrically connect to the negative terminal 40.

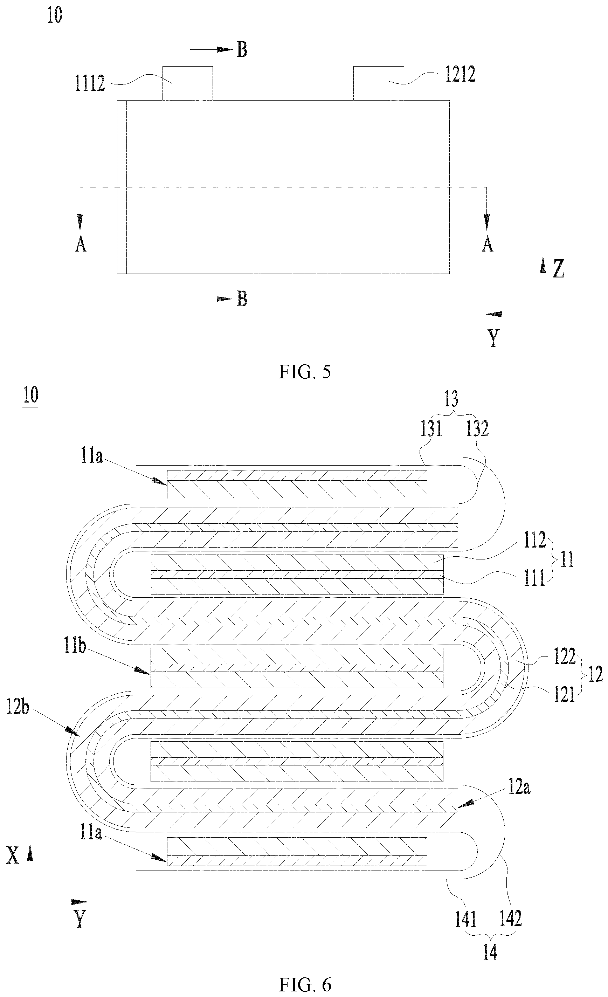

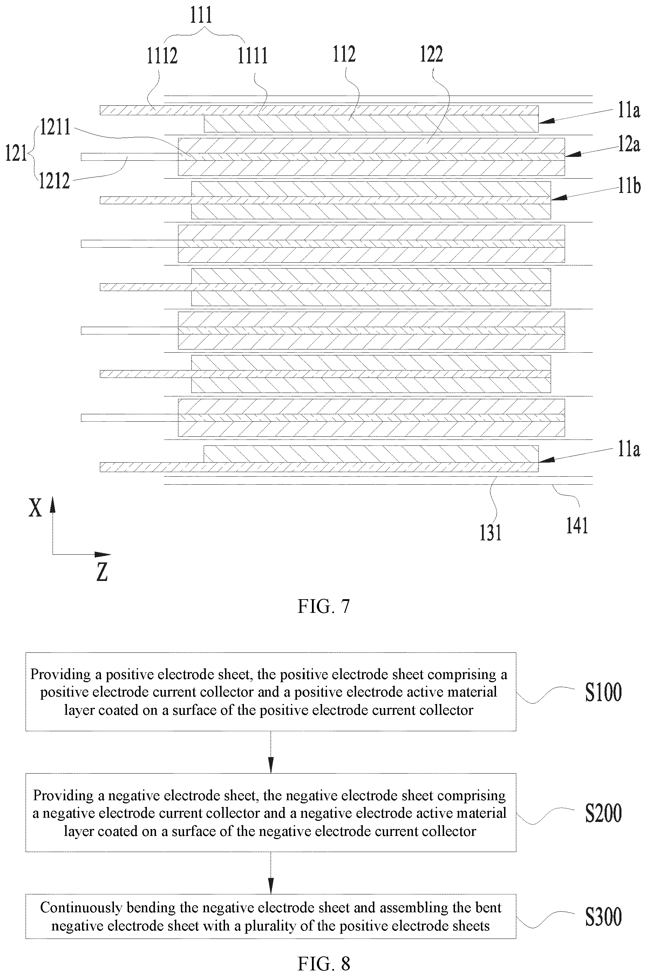

FIG. 5 is a schematic front view of an electrode assembly provided in some embodiments of the present application; FIG. 6 is a schematic cross-sectional view of the electrode assembly shown in FIG. 5, taken in an A-A direction; FIG. 7 is a schematic cross-sectional view of the electrode assembly shown in FIG. 5, taken in a B-B direction.

As shown in FIGS. 5 to 7, the electrode assembly 10 of the embodiments of the present application includes a positive electrode sheet 11 and a negative electrode sheet 12, the positive electrode sheet 11 including a positive electrode current collector 111 and a positive electrode active material layer 112 coated on a surface of the positive electrode current collector 111, and the negative electrode sheet 12 including a negative collector 121 and a negative electrode active material layer 122 coated on a surface of the negative collector 121. The negative electrode sheet 12 is continuously bent and includes a plurality of laminated segments 12a arranged in a laminated manner and a plurality of bent segments 12b, each of the plurality of bent segments 12b being used to connect the two adjacent laminated segments 12a; a plurality of the positive electrode sheets 11 are alternately laminated with the plurality of laminated segments 12a in a first direction X, each of the plurality of laminated segments 12a being disposed between the two adjacent positive electrode sheets 11. In the electrode assembly 10, an outermost positive electrode sheet 11 is configured as a unilateral electrode 11a, and the unilateral electrode 11a having the positive electrode active material layer 112 coated on an inner side, but not on an outer side, of the positive electrode current collector 111 of the unilateral electrode 11a. The bent segment 12b is connected to an end of the laminated segment 12a in a second direction Y that is perpendicular to the first direction X; in the second direction Y, the unilateral electrode 11a does not extend beyond the bent segment 12b adjacent thereto.

The positive electrode current collector 111 includes a positive coating area 1111 and the positive electrode tab 1112 connected to the positive coating area 1111, at least one surface of the positive coating area 1111 being coated with the positive electrode active material layer 112, while both surfaces of the positive electrode tab 1112 being uncoated with the positive electrode active material layer 112. The positive electrode current collector 111 may be made of aluminum, and the positive electrode active material layer 112 includes a positive electrode active material which may be lithium cobaltate, lithium iron phosphate, ternary lithium, or lithium manganate, etc.

Exemplarily, the positive electrode tab 1112 is connected to an end of the positive coating area 1111 in a third direction Z, the third direction Z being perpendicular to the first direction X and the second direction Y.

The negative collector 121 includes a negative coating area 1211 and the negative electrode tab 1212 connected to the negative coating area 1211, at least one surface of the negative coating area 1211 being coated with the negative electrode active material layer 122, while both surfaces of the negative electrode tab 1212 being uncoated with the negative electrode active material layer 122. The negative electrode current collector 121 may be made of copper, and the negative electrode active material layer 122 includes a negative electrode active material which may be carbon or silicon, etc.

Exemplarily, the negative electrode tab 1212 is connected to an end of the negative coating area 1211 in the third direction Z.

The negative electrode sheet 12 is an overall continuous extending structure which is substantially bent in a reciprocating z-shaped manner.

At least a portion of the bent segment 12b is in a bent state. In some examples, the bent segment 12b is overall in a bent state, and the bent segment 12b is substantially arc-shaped, for example, it may be circular arc-shaped. In other examples, the bent segment 12b is only partially in the bent state; specifically, the bent segment 12b has an arc-shaped portion and a flat portion, the arc-shaped portion being bent to be arc-shaped as a whole, e.g., it may be circular arc-shaped, and the flat portion being flat plate-like and connecting the arc-shaped portion and the laminated segment 12a.

The negative electrode tab 1212 is connected to the laminated segment 12a. Exemplarily, the negative electrode tab 1212 is provided on each of the laminated segments 12a and connected thereto.

Exemplarily, both the laminated segment 12a and the positive electrode sheet 11 are flat plate-like and perpendicular to the first direction X. The first direction X is parallel to a thickness direction of the laminated segment 12a and also to a thickness direction of the positive electrode sheet 11.

The number of the positive electrode sheets 11 is one more than the number of the laminated segments 12a, so that both ends of the electrode assembly 10 in the first direction X are the positive electrode sheets 11.

In the first direction X, two outermost positive electrode sheets 11 in the electrode assembly 10 are both unilateral electrodes 11a.

The inner side of the positive electrode current collector 111 of the unilateral electrode 11a refers to the side of the positive electrode current collector 111 of the unilateral electrode 11a facing the laminated segment 12a. The positive electrode active material layer 112 on the inner side of the positive electrode current collector 111 of the unilateral electrode 11a is opposite to the negative electrode active material layer 122.

In this embodiment, by providing the unilateral electrode 11a to make full use of the negative electrode active material layer 122 on the outermost laminated segment 12a of the negative electrode sheet 12, and leaving the outer side of the unilateral electrode 11a uncoated with the positive electrode active material layer 112, wastage of the positive and negative electrode active materials can be reduced and the energy density of the electrode assembly 10 can be improved. The unilateral electrode 11a is an overall unilateral coated structure, which is easy to be obtained with a simple preparation process. By setting the unilateral electrode 11a not to extend in the second direction Y beyond the bent segment 12b adjacent thereto, ions released from the positive electrode active material layer 112 of the unilateral electrode 11a can get embedded in the negative electrode active material layer 122 as much as possible, thereby reducing risk of ion precipitation, and improving safety performance of the electrode assembly 10.

In some embodiments, the unilateral electrode 11a does not extend in the second direction Y beyond the end of the laminated segment 12a adjacent thereto that faces away from the bent segment 12b.

In this embodiment, by setting that neither end of the unilateral electrode 11a in the second direction Y extends beyond the negative electrode sheet 12, the ions released from the positive electrode active material layer 112 of the unilateral electrode 11a can get embedded in the negative electrode active material layer 122 as much as possible, thereby reducing a risk of ion precipitation, and improving safety performance of the electrode assembly 10.

In some embodiments, the unilateral electrode 11a does not extend in the second direction Y beyond the end of the laminated segment 12a adjacent thereto that is near the bent segment 12b.

If the unilateral electrode 11a extends in the second direction Y beyond the end of the laminated segment 12a adjacent thereto that is near the bent segment 12b, then the unilateral electrode 11a and the bent segment 12b are at least partially overlapped in the first direction X. As part of the ions released from the positive electrode active material layer 112 of the unilateral electrode 11a would be embedded in the negative electrode active material layer 122 of the bent segment 12b which is in a bent state, a relatively large gap between the negative electrode active material layer 122 of the bent segment 12b and the positive electrode active material layer 112 of the unilateral electrode 11a would result in a long ion-transport path and a high risk of ion precipitation.

In this embodiment, the positive electrode active material layer 112 of the unilateral electrode 11a is opposite to the negative electrode active material layer 122 of the laminated segment 12a, and the ions released from the positive electrode active material layer 112 of the unilateral electrode 11a get embedded in the negative electrode active material layer 122 of the laminated segment 12a as much as possible. The unilateral electrode 11a and the adjacent bent segment 12b do not overlap in the first direction X, which reduces the gap between the positive electrode active material layer 112 and the negative electrode active material layer 122, shortens the ion transport path, and reduces the risk of ion precipitation.

In some embodiments, the laminated segment 12a adjacent to the unilateral electrode 11a extends beyond both ends of the unilateral electrode 11a in the second direction Y.

In this embodiment, the negative electrode active material layer 122 of the laminated segment 12a can provide a sufficient embedding space for the ions released from the positive electrode active material layer 112 of the unilateral electrode 11a, reducing the risk of ion precipitation. This embodiment also reduces the risk of overlap between the unilateral electrode 11a and the bent segment 12b in the first direction X caused by process errors.

In some embodiments, a dimension of the laminated segment 12a adjacent to the unilateral electrode 11a in the second direction Y is greater than a dimension of the unilateral electrode 11a in the second direction Y.

In some embodiments, in a third direction Z that is perpendicular to the first direction X and the second direction Y, both ends of the laminated segment 12a extend beyond the positive electrode active material layer 112 of the unilateral electrode 11a.

In this embodiment, both ends of the negative electrode active material layer 122 of the laminated segment 12a in the third direction Z extend beyond the positive electrode active material layer 112 of the unilateral electrode 11a, so that a sufficient embedding space can be provided for the ions released from the positive electrode active material layer 112 of the unilateral electrode 11a, reducing the risk of ion precipitation.

In some embodiments, the positive electrode sheet 11 disposed between the adjacent laminated segments 12a is configured as a bilateral electrode 11b, the bilateral electrode 11b having the positive electrode active material layer 112 coated on both sides of the positive electrode current collector 111 of the bilateral electrode 11b.

In this embodiment, by using the bilateral electrode 11b between the adjacent laminated segments 12a, so that the ions released from the positive electrode active material layer 112 on both sides of the positive electrode current collector 111 of the bilateral electrode 11b get embedded in the negative electrode active material layers 122 of the corresponding laminated segments 12a, respectively.

When the electrode assembly 10 is prepared, the bilateral electrode 11b can be assembled with the negative electrode sheet 12 first, and then the unilateral electrode 11a is laminated over the laminated segment 12a of the negative electrode sheet 12.

In some embodiments, a dimension of the unilateral electrode 11a in the second direction Y is less than a dimension of the bilateral electrode 11b in the second direction Y.

When the electrode assembly 10 is prepared, it shall be ensured that the positive electrode active material layer 112 of the bilateral electrode 11b is opposite to the negative electrode active material layer 122 so that the ions released from the positive electrode active material layer 112 of the bilateral electrode 11b can get embedded in the negative electrode active material layer 122 as much as possible, thus reducing the risk of ion precipitation.

During a forming process of the positive electrode sheet 11, roll pressing of the positive electrode sheet 11 is required in order to compact the active material layer of the positive electrode active material layer 112 of the positive electrode sheet 11, thus improving the energy density of the electrode assembly 10. Likewise, roll pressing of the negative electrode sheet 12 is required during a forming process of the negative electrode sheet 12.

When roll-pressing the positive electrode sheet 11, rollers are applied to the positive electrode active material layer 112, and at this time, the positive coating area 1111 is pressed and extended whereas the positive electrode tab 1112 is not pressed, which restricts extending of the positive coating area 1111, resulting in a part of the positive coating area 1111 near the positive electrode tab 1112 being less extended while a part of the positive coating area 1111 away from the positive electrode tab 1112 being more extended, thereby causing a risk of warp and deformation of the positive electrode tab 11.

Especially, compared to the bilateral electrode 11b, the unilateral electrode 11a has a smaller thickness and is more prone to warp and deformation. The warp and deformation of the unilateral electrode 11a will affect assembly accuracy of the unilateral electrode 11a, and could likely cause a risk of the unilateral electrode 11a extending beyond the negative electrode active material layer 122.

In this embodiment, the unilateral electrode 11a has a smaller dimension in the second direction Y, which can ensure that, compared with the bilateral electrode 11b, the unilateral electrode 11a is less likely to extend beyond the adjacent laminated segment 12a in the second direction Y even if the unilateral electrode 11a is warped and deformed, thus reducing accuracy requirements for positioning of the unilateral electrode 11a during assembly, and simplifying the assembly process.

In some embodiments, a dimension of the unilateral electrode 11a in the third direction Z is less than a dimension of the bilateral electrode 11b in the third direction Z, the third direction Z being perpendicular to the first direction X and the second direction Y.

In this embodiment, the dimension of the unilateral electrode 11a in the third direction Z refers to a dimension of the positive electrode active material layer 112 of the unilateral electrode 11a in the third direction Z, and the dimension of the bilateral electrode 11b in the third direction Z refers to a dimension of the positive electrode active material layer 112 of the bilateral electrode 11b in the third direction Z.

In this embodiment, the unilateral electrode 11a has a smaller dimension in the third direction Z, which can ensure that, compared with the bilateral electrode 11b, the positive electrode active material layer 112 of the unilateral electrode 11a is less likely to extend beyond the adjacent laminated segment 12a in the third direction Z even if the unilateral electrode 11a is warped and deformed, thus reducing accuracy requirements for positioning of the unilateral electrode 11a during assembly, and simplifying the assembly process.

In some embodiments, a thickness of the positive electrode current collector 111 of the unilateral electrode 11a is greater than a thickness of the positive electrode current collector 111 of the bilateral electrode 11b.

In this embodiment, the unilateral electrode 11a has a larger thickness of the positive electrode current collector 111 compared to the bilateral electrode 11b, which can reduce warp and deformation of the unilateral electrode 11a during the roll-pressing process, reduce misalignment of the unilateral electrode 11a in the assembly process, and ensure the safety performance of the electrode assembly 10.

In some embodiments, a compaction density of the positive electrode active material layer 112 of the unilateral electrode 11a is less than a compaction density of the positive electrode active material layer 112 of the bilateral electrode 11b.

The compaction density of the positive electrode active material layer 112 is V=S/T, where S is a surface density of the positive electrode active material layer 112 (i.e., a weight per unit area of the positive electrode active material layer 112), and T is a thickness of the positive electrode active material layer 112.

In this embodiment, the unilateral electrode 11a has a smaller compaction density of the positive electrode active material layer 112 compared to the bilateral electrode 11b, which can reduce pressure of the unilateral electrode 11a during the roll-pressing process, reduce warp and deformation of the unilateral electrode 11a, reduce misalignment of the unilateral electrode 11a in the assembly process, and ensure the safety performance of the electrode assembly 10.

In some embodiments, a weight per unit area of the positive electrode active material layer 112 of the unilateral electrode 11a is less than a weight per unit area of the positive electrode active material layer 112 of the bilateral electrode 11b.

In this embodiment, the weight per unit area of the positive electrode active material layer 112 of the bilateral electrode 11b refers to: a weight per unit area of the positive electrode active material layer 112 on one side of the positive electrode current collector 111.

In this embodiment, by decreasing the weight per unit area of the positive electrode active material layer 112 of the unilateral electrode 11a so that the compaction density of the positive electrode active material layer 112 of the unilateral electrode 11a is less than that of the positive electrode active material layer 112 of the bilateral electrode 11b, warp and deformation of the unilateral electrode 11a are reduced, misalignment of the unilateral electrode 11a in the assembly process is reduced, and the safety performance of electrode assembly 10 is ensured.

In some embodiments, a thickness of the positive electrode active material layer 112 of the unilateral electrode 11a is greater than a thickness of the positive electrode active material layer 112 of the bilateral electrode 11b.

In this embodiment, the thickness of the positive electrode active material layer 112 of the bilateral electrode 11b refers to: a thickness of the positive electrode active material layer 112 on one side of the positive electrode current collector 111.

In this embodiment, by increasing the thickness of the positive electrode active material layer 112 of the unilateral electrode 11a so that the compaction density of the positive electrode active material layer 112 of the unilateral electrode 11a is less than that of the positive electrode active material layer 112 of the bilateral electrode 11b, warp and deformation of the unilateral electrode 11a are reduced, misalignment of the unilateral electrode 11a in the assembly process is reduced, and the safety performance of the electrode assembly 10 is ensured.

In some embodiments, the electrode assembly 10 further includes a first separator 13 and a second separator 14, which are used for insulating and separating the positive electrode sheet 11 from the negative electrode sheet 12. The first separator 13 includes a plurality of first separator segments 131 arranged in the first direction X, at least one of the plurality of first separator segments 131 being disposed at an outer side of the unilateral electrode 11a.

The first separator 13 is an overall continuous extending structure which is substantially bent in a reciprocating z-shaped manner. Likewise, the second separator 14 is an overall continuous extending structure which is substantially bent in a reciprocating z-shaped manner.

Exemplarily, the negative electrode sheet 12 can be entirely provided between the first separator 13 and the second separator 14, so that the first separator 13 and the second separator 14 can insulate and separate the positive electrode sheet 11 from the negative electrode sheet 12.

In this embodiment, the first separator segment 131 disposed at the outer side of the unilateral electrode 11a is capable of separating the unilateral electrode 11a from other structures inside the battery cell 7, thereby improving insulation performance and reducing a risk of short circuit.

In some embodiments, the second separator 14 includes a plurality of second separator segments 141 arranged in the first direction X, at least one of the plurality of second separator segments 141 being disposed at the outer side of the unilateral electrode 11a.

In this embodiment, with the at least one first separator segment 131 and the at least one second separator segment 141 being disposed at the outer side of the unilateral electrode 11a, the insulation performance can be further improved, thereby reducing the risk of short circuit.

In some embodiments, the first separator 13 further includes a plurality of first connection segments 132, each of the plurality of first connection segments 132 connecting the two adjacent first separator segments 131, and at least portion of plurality of first connection segments 132 being in a bent state.

In some embodiments, the second separator 14 further includes a plurality of second connection segments 142, each of the plurality of second connection segments 142 connecting the two adjacent second separator segments 141, and at least portion of the plurality of second connection segments 142 being in a bent state.

FIG. 8 is a schematic flow chart of a method of manufacturing an electrode assembly provided in some embodiments of the present application.

As shown in FIG. 8, a method of manufacturing an electrode assembly according to an embodiment of the present application includes:
S100, providing a positive electrode sheet, the positive electrode sheet including a positive electrode current collector and a positive electrode active material layer coated on a surface of the positive electrode current collector;
S200, providing a negative electrode sheet, the negative electrode sheet including a negative electrode current collector and a negative electrode active material layer coated on a surface of the negative electrode current collector; and
S300, continuously bending the negative electrode sheet and assembling the bent negative electrode sheet with a plurality of the positive electrode sheets,
wherein the negative electrode sheet includes a plurality of laminated segments arranged in a laminated manner and a plurality of bent segments, each of the plurality of bent segments being used to connect the two adjacent laminated segments; the plurality of the positive electrode sheets are alternately laminated with the plurality of laminated segments in a first direction, each of the plurality of laminated segments being disposed between the two adjacent positive electrode sheets; in the electrode assembly, an outermost positive electrode sheet is configured as a unilateral electrode, the unilateral electrode having the positive electrode active material layer coated on an inner side, but not on an outer side, of the positive electrode current collector of the unilateral electrode; the bent segment is connected to an end of the laminated segment in a second direction that is perpendicular to the first direction; in the second direction, the unilateral electrode does not extend beyond the bent segment adjacent thereto.

It should be noted that, for relevant structures of an electrode assembly made by the above method of manufacturing the electrode assembly, referring to the electrode assembly provided by the above embodiments.

When an electrode assembly is manufactured based on the above method of manufacturing the electrode assembly, it is not necessary to follow the sequence of the above steps, in other words, steps may be performed in a sequence mentioned in the embodiments, or steps may be performed in a sequence different from that mentioned in the embodiments, or several steps may be performed simultaneously. For example, steps S100 and S200 may be performed in no particular sequence, or may be performed simultaneously.

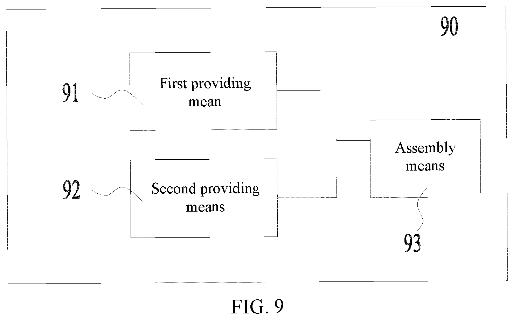

FIG. 9 is a schematic block diagram of a system for manufacturing an electrode assembly provided in some embodiments of the present application.

As shown in FIG. 9, a manufacturing system 90 of an electrode assembly of an embodiment of the present application includes:
a first providing means 91 for providing a positive electrode sheet, the positive electrode sheet including a positive electrode current collector and a positive electrode active material layer coated on a surface of the positive electrode current collector;
a second providing means 92 for providing a negative electrode sheet, the negative electrode sheet including a negative electrode current collector and a negative electrode active material layer coated on a surface of the negative electrode current collector; and
an assembly means 93 for continuously bending the negative electrode sheet and assembling the bent negative electrode sheet with a plurality of the positive electrode sheets,
wherein the negative electrode sheet includes a plurality of laminated segments arranged in a laminated manner and a plurality of bent segments, each of the plurality of bent segments being used to connect the two adjacent laminated segments; the plurality of the positive electrode sheets are alternately laminated with the plurality of laminated segments in a first direction, each of the plurality of laminated segments being disposed between the two adjacent positive electrode sheets; in the electrode assembly, an outermost positive electrode sheet is configured as a unilateral electrode, the unilateral electrode having the positive electrode active material layer coated on an inner side, but not on an outer side, of the positive electrode current collector of the unilateral electrode; the bent segment is connected to an end of the laminated segment in a second direction that is perpendicular to the first direction; in the second direction, the unilateral electrode does not extend beyond the bent segment adjacent thereto.

For relevant structures of an electrode assembly made by the above manufacturing system, referring to the electrode assembly provided by the above embodiments.

It should be noted that, embodiments and features in the embodiments of the present application may be combined if they do not conflict.

Finally, it should be explained that the above embodiments are intended only to illustrate, but not to limit, the technical schemes of the present application; although the detailed description of the present application is given with reference to the above embodiments, an ordinary person skilled in the art will appreciate that it is still possible to modify the technical schemes set forth in the above embodiments or to replace some of the technical features with equivalents, however, such modifications or replacements do not make the essence of the corresponding technical schemes fall out of the spirit and scope of the technical schemes of the embodiments of the present application.

## Claims

1. An electrode assembly (10), comprising a plurality of positive electrode sheets (11) and a negative electrode sheet (12), the positive electrode sheets (11) each comprising a positive electrode current collector (111) and a positive electrode active material layer (112) coated on a surface of the positive electrode current collector (111), and the negative electrode sheet (12) comprising a negative electrode current collector (121) and a negative electrode active material layer (122) coated on a surface of the negative electrode current collector (121), wherein
the negative electrode sheet (12) is continuously bent and comprises a plurality of laminated segments (12a) arranged in a laminated manner and a plurality of bent segments (12b), each of the plurality of bent segments (12b) being used to connect the two adjacent laminated segments (12a); the plurality of positive electrode sheets (11) are alternately laminated with the plurality of laminated segments (12a) in a first direction, each of the plurality of laminated segments (12a) being disposed between the two adjacent positive electrode sheets (11);
**characterized in that**
in the electrode assembly (10), an outermost positive electrode sheet (11) is configured as a unilateral electrode (11a), the unilateral electrode (11a) having the positive electrode active material layer (112) coated on an inner side, but not on an outer side, of the positive electrode current collector (111) of the unilateral electrode (11a); and
the bent segment (12b) is connected to an end of the laminated segment (12a) in a second direction that is perpendicular to the first direction; in the second direction, the unilateral electrode (11a) does not extend beyond the bent segment (12b) adjacent thereto.

2. The electrode assembly (10) according to claim 1, wherein the unilateral electrode (11a) does not extend in the second direction beyond an end of the laminated segment (12a) adjacent thereto that faces away from the bent segment (12b).

3. The electrode assembly (10) according to claim 2, wherein the unilateral electrode (11a) does not extend in the second direction beyond an end of the laminated segment (12a) adjacent thereto that is near the bent segment (12b).

4. The electrode assembly (10) according to any one of claims 1-3, wherein in a third direction that is perpendicular to the first direction and the second direction, both ends of the laminated segment (12a) extend beyond the positive electrode active material layer (112) of the unilateral electrode (11a).

5. The electrode assembly (10) according to any one of claims 1-4, wherein the positive electrode sheet (11) disposed between the adjacent laminated segments (12a) is configured as a bilateral electrode (11b), the bilateral electrode (11b) having the positive electrode active material layer (112) coated on both sides of the positive electrode current collector (111) of the bilateral electrode (11b).

6. The electrode assembly (10) according to claim 5, wherein a dimension of the unilateral electrode (11a) in the second direction is less than a dimension of the bilateral electrode (11b) in the second direction; and/or a dimension of the unilateral electrode (11a) in the third direction is less than a dimension of the bilateral electrode (11b) in the third direction, the third direction being perpendicular to the first direction and the second direction.

7. The electrode assembly (10) according to claim 5 or claim 6, wherein a thickness of the positive electrode current collector (111) of the unilateral electrode (11a) is greater than a thickness of the positive electrode current collector (111) of the bilateral electrode (11b).

8. The electrode assembly (10) according to any one of claims 5-7, wherein a compaction density of the positive electrode active material layer (112) of the unilateral electrode (11a) is less than a compaction density of the positive electrode active material layer (112) of the bilateral electrode (11b).

9. The electrode assembly (10) according to claim 8, wherein a weight per unit area of the positive electrode active material layer (112) of the unilateral electrode (11a) is less than a weight per unit area of the positive electrode active material layer (112) of the bilateral electrode (11b); and/or a thickness of the positive electrode active material layer (112) of the unilateral electrode (11a) is greater than a thickness of the positive electrode active material layer (112) of the bilateral electrode (11b).

10. The electrode assembly (10) according to any one of claims 1-9, further comprising a first separator (13) and a second separator (14), which are used for insulating and separating the positive electrode sheet (11) from the negative electrode sheet (12), wherein
the first separator (13) comprises a plurality of first separator segments (131) arranged in the first direction, at least one of the plurality of first separator segments (131) being disposed at an outer side of the unilateral electrode (11a); optionally the second separator (14) comprises a plurality of second separator segments (141) arranged in the first direction, at least one of the plurality of second separator segments (141) being disposed at an outer side of the unilateral electrode (11a).

11. A battery cell (7), comprising:
the electrode assembly (10) according to any one of claims 1-10; and
a shell (20) for housing the electrode assembly (10).

12. A battery (2), comprising a plurality of the battery cells (7) according to claim 11.

13. An electrical device, comprising the battery (2) according to claim 12, the battery (2) being used for providing electrical energy.

14. A method of manufacturing an electrode assembly (10), the method comprising:
providing a positive electrode sheet (11), the positive electrode sheet (11) comprising a positive electrode current collector (111) and a positive electrode active material layer (112) coated on a surface of the positive electrode current collector (111);
providing a negative electrode sheet (12), the negative electrode sheet (12) comprising a negative electrode current collector (121) and a negative electrode active material layer (122) coated on a surface of the negative electrode current collector (121); and
continuously bending the negative electrode sheet (12) and assembling the bent negative electrode sheet (12) with a plurality of the positive electrode sheets (11);
wherein the negative electrode sheet (12) comprises a plurality of laminated segments (12a) arranged in a laminated manner and a plurality of bent segments (12b), each of the plurality of bent segments (12b) being used to connect the two adjacent laminated segments (12a); the plurality of the positive electrode sheets (11) are alternately laminated with the plurality of laminated segments (12a) in a first direction, each of the plurality of laminated segments (12a) being disposed between the two adjacent positive electrode sheets (11);
in the electrode assembly (10), an outermost positive electrode sheet (11) is configured as a unilateral electrode (11a), the unilateral electrode (11a) having the positive electrode active material layer (112) coated on an inner side, but not on an outer side, of the positive electrode current collector (111) of the unilateral electrode (11a); and
the bent segment (12b) is connected to an end of the laminated segment (12a) in a second direction that is perpendicular to the first direction; in the second direction, the unilateral electrode (11a) does not extend beyond the bent segment (12b) adjacent thereto.

15. A system (90) for manufacturing an electrode assembly (10), the system (90) comprising:
a first providing means (91) for providing a positive electrode sheet (11), the positive electrode sheet (11) comprising a positive electrode current collector (111) and a positive electrode active material layer (112) coated on a surface of the positive electrode current collector (111);
a second providing means (92) for providing a negative electrode sheet (12), the negative electrode sheet (12) comprising a negative electrode current collector (121) and a negative electrode active material layer (122) coated on a surface of the negative electrode current collector (121); and
an assembly means (93) for continuously bending the negative electrode sheet (12) and assembling the bent negative electrode sheet (12) with a plurality of the positive electrode sheets (11);
wherein the negative electrode sheet (12) comprises a plurality of laminated segments (12a) arranged in a laminated manner and a plurality of bent segments (12b), each of the plurality of bent segments (12b) being used to connect the two adjacent laminated segments (12a); the plurality of the positive electrode sheets (11) are alternately laminated with the plurality of laminated segments (12a) in a first direction, each of the plurality of laminated segments (12a) being disposed between the two adjacent positive electrode sheets (11);
in the electrode assembly (10), an outermost positive electrode sheet (11) is configured as a unilateral electrode (11a), the unilateral electrode (11a) having the positive electrode active material layer (112) coated on an inner side, but not on an outer side, of the positive electrode current collector (111) of the unilateral electrode (11a); and
the bent segment (12b) is connected to an end of the laminated segment (12a) in a second direction that is perpendicular to the first direction; in the second direction, the unilateral electrode (11a) does not extend beyond the bent segment (12b) adjacent thereto.

## Patentansprüche

1. Elektrodenanordnung (10), umfassend eine Mehrzahl von positiven Elektrodenblättern (11) und ein negatives Elektrodenblatt (12), wobei die positiven Elektrodenblätter (11) jeweils einen positiven Elektrodenstromkollektor (111) und eine auf eine Oberfläche des positiven Elektrodenstromkollektors (111) aufgebrachte positive Elektrodenaktivmaterialschicht (112) umfassen, und wobei das negative Elektrodenblatt (12) einen negativen Elektrodenstromkollektor (121) und eine auf eine Oberfläche des negativen Elektrodenstromkollektors (121) aufgebrachte negative Elektrodenaktivmaterialschicht (122) umfasst, wobei
das negative Elektrodenblatt (12) kontinuierlich gebogen ist und eine Mehrzahl von laminierten Segmenten (12a), die in laminierter Weise angeordnet sind, und eine Mehrzahl von gebogenen Segmenten (12b) umfasst, wobei jedes der Mehrzahl von gebogenen Segmenten (12b) dazu verwendet wird, die zwei benachbarten laminierten Segmente (12a) zu verbinden; die Mehrzahl von positiven Elektrodenblättern (11) mit der Mehrzahl von laminierten Segmenten (12a) in einer ersten Richtung abwechselnd laminiert ist, wobei jedes der Mehrzahl von laminierten Segmenten (12a) zwischen den zwei benachbarten positiven Elektrodenblättern (11) angeordnet ist;
**dadurch gekennzeichnet, dass**
in der Elektrodenanordnung (10) ein äußerstes positives Elektrodenblatt (11) als einseitige Elektrode (11a) ausgebildet ist, wobei die einseitige Elektrode (11a) die positive Elektrodenaktivmaterialschicht (112) auf einer Innenseite, jedoch nicht auf einer Außenseite, des positiven Elektrodenstromkollektors (111) der einseitigen Elektrode (11a) aufgebracht aufweist; und
das gebogene Segment (12b) mit einem Ende des laminierten Segments (12a) in einer zweiten Richtung verbunden ist, die senkrecht zu der ersten Richtung ist; wobei sich die einseitige Elektrode (11a) in der zweiten Richtung nicht über das dazu benachbarte gebogene Segment (12b) hinaus erstreckt.

2. Elektrodenanordnung (10) nach Anspruch 1, wobei sich die einseitige Elektrode (11a) in der zweiten Richtung nicht über ein Ende des dazu benachbarten laminierten Segments (12a) hinaus erstreckt, das von dem gebogenen Segment (12b) weg weist.

3. Elektrodenanordnung (10) nach Anspruch 2, wobei sich die einseitige Elektrode (11a) in der zweiten Richtung nicht über ein Ende des dazu benachbarten laminierten Segments (12a) hinaus erstreckt, das nahe dem gebogenen Segment (12b) liegt.

4. Elektrodenanordnung (10) nach einem der Ansprüche 1 bis 3, wobei sich in einer dritten Richtung, die senkrecht zu der ersten Richtung und der zweiten Richtung ist, beide Enden des laminierten Segments (12a) über die positive Elektrodenaktivmaterialschicht (112) der einseitigen Elektrode (11a) hinaus erstrecken.

5. Elektrodenanordnung (10) nach einem der Ansprüche 1 bis 4, wobei das zwischen den benachbarten laminierten Segmenten (12a) angeordnete positive Elektrodenblatt (11) als beidseitige Elektrode (11b) ausgebildet ist, wobei die beidseitige Elektrode (11b) die positive Elektrodenaktivmaterialschicht (112) auf beiden Seiten des positiven Elektrodenstromkollektors (111) der beidseitigen Elektrode (11b) aufgebracht aufweist.

6. Elektrodenanordnung (10) nach Anspruch 5, wobei eine Abmessung der einseitigen Elektrode (11a) in der zweiten Richtung kleiner ist als eine Abmessung der beidseitigen Elektrode (11b) in der zweiten Richtung; und/oder eine Abmessung der einseitigen Elektrode (11a) in der dritten Richtung kleiner ist als eine Abmessung der beidseitigen Elektrode (11b) in der dritten Richtung, wobei die dritte Richtung senkrecht zu der ersten Richtung und der zweiten Richtung ist.

7. Elektrodenanordnung (10) nach Anspruch 5 oder Anspruch 6, wobei eine Dicke des positiven Elektrodenstromkollektors (111) der einseitigen Elektrode (11a) größer ist als eine Dicke des positiven Elektrodenstromkollektors (111) der beidseitigen Elektrode (11b).

8. Elektrodenanordnung (10) nach einem der Ansprüche 5 bis 7, wobei eine Verdichtungsdichte der positiven Elektrodenaktivmaterialschicht (112) der einseitigen Elektrode (11a) kleiner ist als eine Verdichtungsdichte der positiven Elektrodenaktivmaterialschicht (112) der beidseitigen Elektrode (11b).

9. Elektrodenanordnung (10) nach Anspruch 8, wobei ein Gewicht pro Flächeneinheit der positiven Elektrodenaktivmaterialschicht (112) der einseitigen Elektrode (11a) kleiner ist als ein Gewicht pro Flächeneinheit der positiven Elektrodenaktivmaterialschicht (112) der beidseitigen Elektrode (11b); und/oder eine Dicke der positiven Elektrodenaktivmaterialschicht (112) der einseitigen Elektrode (11a) größer ist als eine Dicke der positiven Elektrodenaktivmaterialschicht (112) der beidseitigen Elektrode (11b).

10. Elektrodenanordnung (10) nach einem der Ansprüche 1 bis 9, ferner umfassend einen ersten Separator (13) und einen zweiten Separator (14), die zum Isolieren und Trennen des positiven Elektrodenblatts (11) von dem negativen Elektrodenblatt (12) verwendet werden, wobei
der erste Separator (13) eine Mehrzahl von ersten Separatorsegmenten (131) umfasst, die in der ersten Richtung angeordnet sind, wobei mindestens eines der Mehrzahl von ersten Separatorsegmenten (131) an einer Außenseite der einseitigen Elektrode (11a) angeordnet ist; optional der zweite Separator (14) eine Mehrzahl von zweiten Separatorsegmenten (141) umfasst, die in der ersten Richtung angeordnet sind, wobei mindestens eines der Mehrzahl von zweiten Separatorsegmenten (141) an einer Außenseite der einseitigen Elektrode (11a) angeordnet ist.

11. Batteriezelle (7), umfassend:
die Elektrodenanordnung (10) nach einem der Ansprüche 1 bis 10; und ein Gehäuse (20) zur Aufnahme der Elektrodenanordnung (10).

12. Batterie (2), umfassend eine Mehrzahl der Batteriezellen (7) nach Anspruch 11.

13. Elektrische Vorrichtung, umfassend die Batterie (2) nach Anspruch 12, wobei die Batterie (2) zum Bereitstellen elektrischer Energie verwendet wird.

14. Verfahren zur Herstellung einer Elektrodenanordnung (10), wobei das Verfahren umfasst:
Bereitstellen eines positiven Elektrodenblatts (11), wobei das positive Elektrodenblatt (11) einen positiven Elektrodenstromkollektor (111) und eine auf eine Oberfläche des positiven Elektrodenstromkollektors (111) aufgebrachte positive Elektrodenaktivmaterialschicht (112) umfasst;
Bereitstellen eines negativen Elektrodenblatts (12), wobei das negative Elektrodenblatt (12) einen negativen Elektrodenstromkollektor (121) und eine auf eine Oberfläche des negativen Elektrodenstromkollektors (121) aufgebrachte negative Elektrodenaktivmaterialschicht (122) umfasst; und
kontinuierliches Biegen des negativen Elektrodenblatts (12) und Zusammenbauen des gebogenen negativen Elektrodenblatts (12) mit einer Mehrzahl der positiven Elektrodenblätter (11);
wobei das negative Elektrodenblatt (12) eine Mehrzahl von laminierten Segmenten (12a), die in laminierter Weise angeordnet sind, und eine Mehrzahl von gebogenen Segmenten (12b) umfasst, wobei jedes der Mehrzahl von gebogenen Segmenten (12b) dazu verwendet wird, die zwei benachbarten laminierten Segmente (12a) zu verbinden; die Mehrzahl der positiven Elektrodenblätter (11) mit der Mehrzahl von laminierten Segmenten (12a) in einer ersten Richtung abwechselnd laminiert ist, wobei jedes der Mehrzahl von laminierten Segmenten (12a) zwischen den zwei benachbarten positiven Elektrodenblättern (11) angeordnet ist;
in der Elektrodenanordnung (10) ein äußerstes positives Elektrodenblatt (11) als einseitige Elektrode (11a) ausgebildet ist, wobei die einseitige Elektrode (11a) die positive Elektrodenaktivmaterialschicht (112) auf einer Innenseite, jedoch nicht auf einer Außenseite, des positiven Elektrodenstromkollektors (111) der einseitigen Elektrode (11a) aufgebracht aufweist; und
das gebogene Segment (12b) mit einem Ende des laminierten Segments (12a) in einer zweiten Richtung verbunden ist, die senkrecht zu der ersten Richtung ist; wobei sich die einseitige Elektrode (11a) in der zweiten Richtung nicht über das dazu benachbarte gebogene Segment (12b) hinaus erstreckt.

15. System (90) zur Herstellung einer Elektrodenanordnung (10), wobei das System (90) umfasst:
ein erstes Bereitstellungsmittel (91) zum Bereitstellen eines positiven Elektrodenblatts (11), wobei das positive Elektrodenblatt (11) einen positiven Elektrodenstromkollektor (111) und eine auf eine Oberfläche des positiven Elektrodenstromkollektors (111) aufgebrachte positive Elektrodenaktivmaterialschicht (112) umfasst;
ein zweites Bereitstellungsmittel (92) zum Bereitstellen eines negativen Elektrodenblatts (12), wobei das negative Elektrodenblatt (12) einen negativen Elektrodenstromkollektor (121) und eine auf eine Oberfläche des negativen Elektrodenstromkollektors (121) aufgebrachte negative Elektrodenaktivmaterialschicht (122) umfasst; und
ein Montagemittel (93) zum kontinuierlichen Biegen des negativen Elektrodenblatts (12) und Zusammenbauen des gebogenen negativen Elektrodenblatts (12) mit einer Mehrzahl der positiven Elektrodenblätter (11);
wobei das negative Elektrodenblatt (12) eine Mehrzahl von laminierten Segmenten (12a), die in laminierter Weise angeordnet sind, und eine Mehrzahl von gebogenen Segmenten (12b) umfasst, wobei jedes der Mehrzahl von gebogenen Segmenten (12b) dazu verwendet wird, die zwei benachbarten laminierten Segmente (12a) zu verbinden; die Mehrzahl der positiven Elektrodenblätter (11) mit der Mehrzahl von laminierten Segmenten (12a) in einer ersten Richtung abwechselnd laminiert ist, wobei jedes der Mehrzahl von laminierten Segmenten (12a) zwischen den zwei benachbarten positiven Elektrodenblättern (11) angeordnet ist;
in der Elektrodenanordnung (10) ein äußerstes positives Elektrodenblatt (11) als einseitige Elektrode (11a) ausgebildet ist, wobei die einseitige Elektrode (11a) die positive Elektrodenaktivmaterialschicht (112) auf einer Innenseite, jedoch nicht auf einer Außenseite, des positiven Elektrodenstromkollektors (111) der einseitigen Elektrode (11a) aufgebracht aufweist; und
das gebogene Segment (12b) mit einem Ende des laminierten Segments (12a) in einer zweiten Richtung verbunden ist, die senkrecht zu der ersten Richtung ist; wobei sich die einseitige Elektrode (11a) in der zweiten Richtung nicht über das dazu benachbarte gebogene Segment (12b) hinaus erstreckt.

## Revendications

1. Ensemble d'électrodes (10), comprenant une pluralité de feuilles d'électrode positive (11) et une feuille d'électrode négative (12), les feuilles d'électrode positive (11) comprenant chacune un collecteur de courant d'électrode positive (111) et une couche de matériau actif d'électrode positive (112) revêtue sur une surface du collecteur de courant d'électrode positive (111), et la feuille d'électrode négative (12) comprenant un collecteur de courant d'électrode négative (121) et une couche de matériau actif d'électrode négative (122) revêtue sur une surface du collecteur de courant d'électrode négative (121), dans lequel
la feuille d'électrode négative (12) est pliée de manière continue et comprend une pluralité de segments stratifiés (12a) agencés de manière stratifiée et une pluralité de segments pliés (12b), chacun de la pluralité de segments pliés (12b) étant utilisé pour relier les deux segments stratifiés adjacents (12a) ; la pluralité de feuilles d'électrode positive (11) sont stratifiées en alternance avec la pluralité de segments stratifiés (12a) dans une première direction, chacun de la pluralité de segments stratifiés (12a) étant disposé entre les deux feuilles d'électrode positive adjacentes (11) ;
**caractérisé en ce que**
dans l'ensemble d'électrodes (10), une feuille d'électrode positive la plus externe (11) est configurée comme une électrode unilatérale (11a), l'électrode unilatérale (11a) ayant la couche de matériau actif d'électrode positive (112) revêtue sur un côté intérieur, mais non sur un côté extérieur, du collecteur de courant d'électrode positive (111) de l'électrode unilatérale (11a) ; et
le segment plié (12b) est relié à une extrémité du segment stratifié (12a) dans une deuxième direction qui est perpendiculaire à la première direction ; dans la deuxième direction, l'électrode unilatérale (11a) ne s'étend pas au-delà du segment plié (12b) adjacent à celle-ci.

2. Ensemble d'électrodes (10) selon la revendication 1, dans lequel l'électrode unilatérale (11a) ne s'étend pas dans la deuxième direction au-delà d'une extrémité du segment stratifié (12a) adjacent à celle-ci qui est orientée à l'opposé du segment plié (12b).

3. Ensemble d'électrodes (10) selon la revendication 2, dans lequel l'électrode unilatérale (11a) ne s'étend pas dans la deuxième direction au-delà d'une extrémité du segment stratifié (12a) adjacent à celle-ci qui est proche du segment plié (12b).

4. Ensemble d'électrodes (10) selon l'une quelconque des revendications 1 à 3, dans lequel, dans une troisième direction qui est perpendiculaire à la première direction et à la deuxième direction, les deux extrémités du segment stratifié (12a) s'étendent au-delà de la couche de matériau actif d'électrode positive (112) de l'électrode unilatérale (11a).

5. Ensemble d'électrodes (10) selon l'une quelconque des revendications 1 à 4, dans lequel la feuille d'électrode positive (11) disposée entre les segments stratifiés adjacents (12a) est configurée comme une électrode bilatérale (11b), l'électrode bilatérale (11b) ayant la couche de matériau actif d'électrode positive (112) revêtue sur les deux côtés du collecteur de courant d'électrode positive (111) de l'électrode bilatérale (11b).

6. Ensemble d'électrodes (10) selon la revendication 5, dans lequel une dimension de l'électrode unilatérale (11a) dans la deuxième direction est inférieure à une dimension de l'électrode bilatérale (11b) dans la deuxième direction ; et/ou une dimension de l'électrode unilatérale (11a) dans la troisième direction est inférieure à une dimension de l'électrode bilatérale (11b) dans la troisième direction, la troisième direction étant perpendiculaire à la première direction et à la deuxième direction.

7. Ensemble d'électrodes (10) selon la revendication 5 ou la revendication 6, dans lequel une épaisseur du collecteur de courant d'électrode positive (111) de l'électrode unilatérale (11a) est supérieure à une épaisseur du collecteur de courant d'électrode positive (111) de l'électrode bilatérale (11b).

8. Ensemble d'électrodes (10) selon l'une quelconque des revendications 5 à 7, dans lequel une densité de compactage de la couche de matériau actif d'électrode positive (112) de l'électrode unilatérale (11a) est inférieure à une densité de compactage de la couche de matériau actif d'électrode positive (112) de l'électrode bilatérale (11b).

9. Ensemble d'électrodes (10) selon la revendication 8, dans lequel un poids par unité de surface de la couche de matériau actif d'électrode positive (112) de l'électrode unilatérale (11a) est inférieur à un poids par unité de surface de la couche de matériau actif d'électrode positive (112) de l'électrode bilatérale (11b) ; et/ou une épaisseur de la couche de matériau actif d'électrode positive (112) de l'électrode unilatérale (11a) est supérieure à une épaisseur de la couche de matériau actif d'électrode positive (112) de l'électrode bilatérale (11b).

10. Ensemble d'électrodes (10) selon l'une quelconque des revendications 1 à 9, comprenant en outre un premier séparateur (13) et un deuxième séparateur (14), qui sont utilisés pour isoler et séparer la feuille d'électrode positive (11) de la feuille d'électrode négative (12), dans lequel
le premier séparateur (13) comprend une pluralité de premiers segments de séparateur (131) agencés dans la première direction, au moins l'un de la pluralité de premiers segments de séparateur (131) étant disposé sur un côté extérieur de l'électrode unilatérale (11a) ; facultativement, le deuxième séparateur (14) comprend une pluralité de deuxièmes segments de séparateur (141) agencés dans la première direction, au moins l'un de la pluralité de deuxièmes segments de séparateur (141) étant disposé sur un côté extérieur de l'électrode unilatérale (11a).

11. Cellule de batterie (7), comprenant :
l'ensemble d'électrodes (10) selon l'une quelconque des revendications 1 à 10 ; et une coque (20) destinée à loger l'ensemble d'électrodes (10).

12. Batterie (2), comprenant une pluralité des cellules de batterie (7) selon la revendication 11.

13. Dispositif électrique, comprenant la batterie (2) selon la revendication 12, la batterie (2) étant utilisée pour fournir de l'énergie électrique.

14. Procédé de fabrication d'un ensemble d'électrodes (10), le procédé comprenant :
la fourniture d'une feuille d'électrode positive (11), la feuille d'électrode positive (11) comprenant un collecteur de courant d'électrode positive (111) et une couche de matériau actif d'électrode positive (112) revêtue sur une surface du collecteur de courant d'électrode positive (111) ;
la fourniture d'une feuille d'électrode négative (12), la feuille d'électrode négative (12) comprenant un collecteur de courant d'électrode négative (121) et une couche de matériau actif d'électrode négative (122) revêtue sur une surface du collecteur de courant d'électrode négative (121) ; et
le pliage continu de la feuille d'électrode négative (12) et l'assemblage de la feuille d'électrode négative pliée (12) avec une pluralité des feuilles d'électrode positive (11) ;
dans lequel la feuille d'électrode négative (12) comprend une pluralité de segments stratifiés (12a) agencés de manière stratifiée et une pluralité de segments pliés (12b), chacun de la pluralité de segments pliés (12b) étant utilisé pour relier les deux segments stratifiés adjacents (12a) ; la pluralité des feuilles d'électrode positive (11) sont stratifiées en alternance avec la pluralité de segments stratifiés (12a) dans une première direction, chacun de la pluralité de segments stratifiés (12a) étant disposé entre les deux feuilles d'électrode positive adjacentes (11) ;
dans l'ensemble d'électrodes (10), une feuille d'électrode positive la plus externe (11) est configurée comme une électrode unilatérale (11a), l'électrode unilatérale (11a) ayant la couche de matériau actif d'électrode positive (112) revêtue sur un côté intérieur, mais non sur un côté extérieur, du collecteur de courant d'électrode positive (111) de l'électrode unilatérale (11a) ; et
le segment plié (12b) est relié à une extrémité du segment stratifié (12a) dans une deuxième direction qui est perpendiculaire à la première direction ; dans la deuxième direction, l'électrode unilatérale (11a) ne s'étend pas au-delà du segment plié (12b) adjacent à celle-ci.

15. Système (90) de fabrication d'un ensemble d'électrodes (10), le système (90) comprenant :
un premier moyen de fourniture (91) pour fournir une feuille d'électrode positive (11), la feuille d'électrode positive (11) comprenant un collecteur de courant d'électrode positive (111) et une couche de matériau actif d'électrode positive (112) revêtue sur une surface du collecteur de courant d'électrode positive (111) ;
un deuxième moyen de fourniture (92) pour fournir une feuille d'électrode négative (12), la feuille d'électrode négative (12) comprenant un collecteur de courant d'électrode négative (121) et une couche de matériau actif d'électrode négative (122) revêtue sur une surface du collecteur de courant d'électrode négative (121) ; et
un moyen d'assemblage (93) pour plier de manière continue la feuille d'électrode négative (12) et assembler la feuille d'électrode négative pliée (12) avec une pluralité des feuilles d'électrode positive (11) ;
dans lequel la feuille d'électrode négative (12) comprend une pluralité de segments stratifiés (12a) agencés de manière stratifiée et une pluralité de segments pliés (12b), chacun de la pluralité de segments pliés (12b) étant utilisé pour relier les deux segments stratifiés adjacents (12a) ; la pluralité des feuilles d'électrode positive (11) sont stratifiées en alternance avec la pluralité de segments stratifiés (12a) dans une première direction, chacun de la pluralité de segments stratifiés (12a) étant disposé entre les deux feuilles d'électrode positive adjacentes (11) ;
dans l'ensemble d'électrodes (10), une feuille d'électrode positive la plus externe (11) est configurée comme une électrode unilatérale (11a), l'électrode unilatérale (11a) ayant la couche de matériau actif d'électrode positive (112) revêtue sur un côté intérieur, mais non sur un côté extérieur, du collecteur de courant d'électrode positive (111) de l'électrode unilatérale (11a) ; et
le segment plié (12b) est relié à une extrémité du segment stratifié (12a) dans une deuxième direction qui est perpendiculaire à la première direction ; dans la deuxième direction, l'électrode unilatérale (11a) ne s'étend pas au-delà du segment plié (12b) adjacent à celle-ci.
